# EUROPEAN PATENT SPECIFICATION

(11) **EP 1 234 426 B1**
(45) Date of publication and mention of the grant of the patent: **02.03.2005**
(21) Application number: 00976208.9
(22) Date of filing: 27.11.2000
(51) Int. Cl.: H04L 29/06

(54) **METHOD AND SYSTEM FOR IDENTIFYING ENCODING/DECODING INFORMATION IN A MOBILE RADIO NETWORK**
SYSTEM UND VERFAHREN ZUR IDENTIFIZIERUNG VON KODIERUNGS/DEKODIERUNGS-INFORMATIONEN IN EINEM MOBILKOMMUNIKATIONSNETZWERK
PROCEDE ET SYSTEME DESTINES A IDENTIFIER UNE INFORMATION DE CODAGE/DECODAGE DANS UN RESEAU HERTZIEN DE MOBILES

(30) Priority: 29.11.1999 US 167868 P
(43) Date of publication of application: 28.08.2002
(73) Proprietor: Nokia Corporation, 02150 Espoo (FI)
(72) Inventor: SUUMÄKI, Jan, FIN-33720 Tampere (FI); KALLIO, Hans, FIN-33100 Tampere (FI); KALLIOKULJU, Juha, FIN-37470 Vesilahti (FI)
(74) Representative: Leson, Thomas Johannes Alois, Dipl.-Ing.
(86) International application number: PCT/IB2000/001758
(87) International publication number: WO 2001/039391

(56) References cited:
- US-A- 5 293 379
- DEGERMARK M ET AL: "LOW-LOSS TCP/IP HEADER COMPRESSION FOR WIRELESS NETWORKS" WIRELESS NETWORKS, ACM, US, vol. 3, no. 5, 1 October 1997 (1997-10-01), pages 375-387, XP000728935 ISSN: 1022-0038
- DEGERMARK M: "RFC2507: IP Header Compression" IP HEADER COMPRESSION. NETWORK WORKING GROUP, XX, XX, 1 March 1999 (1999-03-01), pages 1-47, XP002157130

## Description

### Field of the Invention

The present invention relates generally to the second and third generation mobile system and, more particularly, to the General Packet Radio Services (GPRS) and the Universal Mobile Telecommunications Systems (UMTS).

### Background of the Invention

Current digital cellular telephone systems such as GSM (Global System for Mobile communications) were designed with an emphasis on voice communications. Data is normally transmitted between a mobile station (MS) and a base station subsystem (BSS) over the air interface using the so called "circuit-switched" transmission mode where a physical channel, i.e. a series of regularly spaced time slots on one or more frequencies, is reserved for the duration of the call. For voice communications, where the stream of information to be transmitted is relatively continuous, the circuit switched transmission mode is reasonably efficient. However, during data calls, e.g., internet access, the data stream is "bursty" and the long term reservation of a physical channel in the circuit switched mode represents an uneconomic use of the air interface.

Given that the demand for data services with digital cellular telephone systems is increasing rapidly, a new GSM based service known as the General Packet Radio Service (GPRS) is currently being standardized by the European Telecommunications Standards Institute (ETSI) and is defined in overall terms in recommendation GSM 03.60. GPRS provides for the dynamic allocation of physical channels for data transmission. That is to say that a physical channel is allocated to a particular MS to BSS link only when there is data to be transmitted. The unnecessary reservation of physical channels when there is no data to be transmitted is avoided.

GPRS is intended to operate in conjunction with conventional GSM circuit switched transmission to efficiently use the air interface for both data and voice communications. GPRS will therefore use the basic channel structure defined for GSM. In GSM, a given frequency band is divided in the time domain into a succession of frames, known as TDMA (Time Division Multiple Access) frames. The length of a TDMA frame is 4.615ms. Each TDMA frame is in turn divided into eight consecutive slots of equal duration. In the conventional circuit-switched transmission mode, when a call is initiated, a physical channel is defined for that call by reserving a given time slot (1 to 8) in each of a succession of TDMA frames. Physical channels are similarly defined for conveying signaling information.

With the introduction of GPRS, a "traffic channel" for transmitting data is created by dynamically assigned physical channels for either switched-circuit transmission mode or for packet switched transmission mode. When the network requirement for switched-circuit transmission mode is high, a large number of physical channels may be reserved for that mode. On the other hand, when demand for GPRS transmission is high, a large number of physical channels may be reserved for that mode. In addition, a high-speed, packet switched transmission channel may be provided by assigning two or more slots in each of a succession of TDMA frames to a single MS.

The GPRS radio interface for GSM Phase 2+ (GSM 03.64) can be modeled as a hierarchy of logical layers with specific functions, where the mobile station (MS) and the network have identical layers which communicate via the MS/network interface Um. Each layer formats data received from the neighboring layer, with received data passing from the bottom to the top layer and data for transmission passing from the top to the bottom layer.

At the top layer in the MS are a number of packet data protocol (PDP) entities. Certain of these PDP entities use point-to-point protocols (PTPs) adapted for sending packet data from one MS to another MS, or from one MS to a fixed terminal. Examples of PTP protocols are IP (Internet Protocol) and X.25, which are capable of interfacing with user applications. It is noted that two or more of the PDP entities may use the same type of PDP. Also on the top layer are other GPRS end point protocol entities such as SMS and signaling (L3M). A similar arrangement exists within the network and in particular at the Serving GPRS Support Node (SGSN).

Certain of the top layer entities use a common Subnetwork Dependent Convergence Protocol (SNDCP) B GSM 04.65 B which, as its name suggests, translates (or "converges") the different SNDCP user data into a common form (SNDCP protocol data units) suitable for further processing in a transparent way. SNDCP units are up to 1500 octets and comprise an addressing field, which contains a network service access point identifier (NSAPI) that identifies the endpoint connection, i.e. the SNDCP user. Each MS may be assigned a set of NSAPIs independently of the other MSs. This architecture means that new PDPs and relays may be developed in the future, which can be readily incorporated into the existing GPRS architecture.

Each SNDCP (or other GPRS end point protocol) unit is carried by one logical link control (LLC) frame over the radio interface. The LLC frames are formulated in the LLC layer (GSM 04.64) and include a header frame with numbering and temporary addressing fields, a variable length information field, and a frame check sequence. More particularly, the addressing fields include a service access point identifier (SAPI), which is used to identify a specific connection endpoint (and its relative priority and Quality of Services (QoS)) on the network side and the user side of the LLC interface. One connection endpoint is the SNDCP. Other endpoints include the short message service (SMS) and management layer (L3M). The LLC layer formats data received from these different endpoint protocols. SAPIs are allocated permanently and are common to all MSs.

The Radio Link Control (RLC) layer defines, amongst other things, the procedures for segmenting and re-assembling Logical Link Control layer Protocol Data Units (LLC-PDUs) into RLC Data Blocks, and for retransmission of unsuccessfully delivered RLC blocks. The Medium Access Control (MAC) layer operates above the Phys. Link layer and defines the procedures that enable multiple MSs to share a common transmission medium. The MAC function arbitrates between multiple MSs attempting to transmit simultaneously and provides collision avoidance, detection and recovery procedures.

The physical link later (Phys. Link) provides a physical channel between the MS and the network. The physical RF layer (Phys. RF) specifies, amongst other things, the carrier frequencies and GSM radio channel structures, modulation of the GSM channels, and transmitter/receiver characteristics.

When an MS becomes active in a network, it is necessary to define exactly how data is to be processed at each of the layers described above. This process also involves conducting preliminary negotiations between the MS and the network. In particular, control parameters known as SNDCP exchange identity (XID) parameters are exchanged between the two peer SNDCP layers, via the respective LLC layers, in an XID parameter negotiation stage. Initialization of XID negotiation may occur at either the MS or the network. Upon receipt of an XID parameter, the peer entity either configures itself according to that parameter or carries out a further negotiation with the user entity. The field format for the SNDCP XID parameters is shown in TABLE I, as follows:

**TABLE I**

| bit | 8 | 7 | 6 | 5 | 4 | 3 | 2 | 1 |
|---|---|---|---|---|---|---|---|---|
| octet I | Parameter Type | | | | | | | |
| octet 2 | Length = n-1 | | | | | | | |
| octet 3 | High-order octet | | | | | | | |
| .... | .... | | | | | | | |
| octet n | Low-order octet | | | | | | | |

The compression of protocol and/or user data is optionally carried out in the SNDCP layer (as is described in GSM recommendation 04.65). Data is first compressed and is then sub-divided into blocks before the SNDCP header is added and the SNDCP unit assembled.

In the present GSM 04.65 recommendation, several different compression algorithms may be provided for the compression of protocol data, while only a single compression algorithm is specifically considered for compression of user data (although provision is made for future developments in which several different user data compression algorithms are made available). Typically, the decision over whether to use compression is made by the user interface application, which generates the user data supplied to the SNDCP layer via one of the SNDCP users. The decision is notified to the SNDCP layer. However, compression can only be used providing that this is available at both peer SNDCP layers.

During the SNDCP XID parameter negotiations, one or more protocol compression/decompression entities may be defined, and identified to the two peer SNDCP layers, by the exchange of XID parameters. Similarly, a user data compression/decompression entity (or several such entities) may be defined by the exchange of other XID parameters. GSM recommendation 04.65 proposes the following XID message for this purpose, as shown in TABLE II:

**TABLE II**

| bit | 8 | 7 | 6 | 5 | 4 | 3 | 2 | 1 |
|---|---|---|---|---|---|---|---|---|
| octet I | Algorithm | | | | | | | |
| octet 2 | Length = n-1 | | | | | | | |
| octet 3 | High-order octet | | | | | | | |
| .... | .... | | | | | | | |
| octet n | Low-order octet | | | | | | | |

In TABLE II, octet 1 identifies a particular algorithm, while octet 2 identifies the number of octets to follow in the XID message. The following octets define parameters of the chosen algorithm such as the length of a codebook to be used or the length of the codeword to be used in a codebook.

As has already been described, PDP context data is assembled in the SNDCP layer into SNDCP units. The SNDCP layer attaches to each unit a PCOMP (Protocol control information COMPression) tag and a DCOMP (Data COMpression) tag specifying an assigned value. The PCOMP and DCOMP values define negotiated compression protocol per data packet. In particular, it identifies whether or not the protocol control information and user data contained within that unit has been compressed and, if so, which algorithm was used. Upon receipt of each unit, the receiving SNDCP layer can determine whether or not the PDP context data needs to be decompressed and, if so, what decompression algorithms need to be used, before routing the data to the appropriate entity (identified by the NSAPI contained in the received SNDCP unit).

According to sub-clause 6.5.1.1.5 of 3GPP TS 04.65 V8.1.0 GPRS MS-SGSN SNDCP (2000-09), one or more PCOMP values are assigned dynamically to a compression algorithm, based on the negotiation of the XID parameters for protocol control information compression. Each of the assigned PCOMP values denotes one compressed frame type of that compression algorithm.

The assignment of the PCOMP values follows the following general rules:
- PCOMP shall be an integer from 0 to 15.
- PCOMP value 0 is reserved permanently for no compression.
- PCOMP shall be assigned independently on each of the SAPIs.
- An assigned PCOMP value applies to all NSAPIs mapped to the same SAPI.
- PCOMP values shall be assigned to compression algorithms, not to compression entities (i.e., the same PCOMP value(s) shall be used by different compression entities on the same SAPI using the same compression algorithm).
- A PCOMP value shall be in one of the three states: unassigned, selected, or assigned.
- When a new compression entity is to be proposed, and if PCOMP values have not yet been assigned to the corresponding compression algorithm, then the appropriate number of unassigned PCOMP values shall be selected. If there are not enough unassigned PCOMP values left, the compression entity shall not be proposed.
- A selected PCOMP value shall become assigned if the corresponding proposed compression entity is created as a result of the XID negotiation, otherwise it shall become unassigned.
- An assigned PCOMP value shall become unassigned when the corresponding compression algorithm is no longer in use by any compression entity, or upon the receipt of the LL-RESET.indication primitive.
- In the case of a collision (see subclause 6.2.1.4), the handling of PCOMP values shall be in accordance with subclause 6.5.1.1.3.

While transferring data, the compressed frame type for an N-PDU is conveyed in the PCOMP field of the SNDCP header of the first SN-PDU belonging to the N-PDU. Any successfully negotiated algorithm may be used for compression of an N-PDU.

Like protocol control information compression, user data compression is an optional SNDCP feature. The data compression field format for SNDCP XID negotiation is similar to the field format for protocol control information compression. The field format for the SNDCP XID parameters, as shown in TABLE I and TABLE II, is applied to both PCOMP and DCOMP. The assignment of DCOMP values follows the rules for the assignment of PCOMP values in sub-clause 6.5.1.1.5 of 3GPP TS 04.65, as described above.

Compression algorithms suitable for compressing data (both protocol and user data) in the SNDCP layer include algorithms which rely upon the creation of a codebook in which a set for codes are identified by respective vectors. For each data segment, the codebook is searched to find the best matching code. The vector is then transmitted to the peer entity, which contains an identical codebook, which is searched, using the vector, to recover the original code. In order to optimize the efficiency of the compression process for the data to be compressed, the codebook is dynamically updated using the received data. Where the same compression algorithm is used by two or more PDP entities, these entities share the same codebook.

It should be noted that a useful discussion of header compression can be found in the article "Low-loss TCP/IP header compression for wireless networks" by Degermark et al., on pages 375-387 of the periodical "Wireless Networks" (1997). Degermark's paper provides header compression schemes, and also provides helpful general background information about compression.

In a Universal Mobile Telecommunications System (UMTS), packet traffic is similar to GPRS, and the packet data of UMTS is an evolution of those of GPRS. As with GPRS, the air interface in UMTS is a bandwidth restricted media. There is a need to provide a method and system to optimize the packet traffic in order to reduce the data rate (overhead) in air interface. Furthermore, it is advantageous and desirable to provide a method and system to optimize the packet traffic in consideration of the potential needs for future development.

### Summary of the Invention

It is a primary objective of the present invention to reduce the header overhead in air interface of a mobile radio network. In GPRS, current optimization methods require that SNDCP offers a 4-bit long information field to attach the PCOMP tag to identify the header compression algorithm type and packet type. The different compression methods available for SNDCP XID negotiations are herein referred to as PCOMP values. For example, there are two algorithm types, or compression methods, currently specified for TCP/IP header compression. According to RFC1144, two PCOMP values are assigned to the header compression algorithm: PCOMP1 and PCOMP2 contain the PCOMP value for the frame type "Uncompressed TCP" and "Compressed TCP", respectively. The PCOMP value of 0 is used for the frame type "Type IP". In RFC2507, the PCOMP value 0 is used for regular IPv4 and Ipv6 packets, and the other five PCOMP values are for the frame types "Full header", "Compressed TCP", "Compressed TCP non-data", "Compressed non-TCP" and "Context state". As the 4-bit PCOMP information field is used to identify seven DCOMP values, there is extra room for eight more values. Similarly, a 4-bit long information field for attaching a similar DCOMP tag is used to identify different DCOMP values regarding data compression, but only one DCOMP value (e.g. V42Bis) is currently assigned. Accordingly, there is extra room for fourteen more values in the reserved DCOMP identification field. Thus, a total of 8 bits is currently reserved in GPRS, and there are twenty-two unused values in these reserved information fields. Because it is possible to use fifteen combined values to identify the combinations of all seven PCOMP values and one DCOMP value, 4 bits in the header overhead can be saved if the DCOMP identification field and the PCOMP field are combined into one single identification field. Moreover, more bits can be saved if there are three or more separate information fields to be incorporated into one combined information field.

The present invention combines two or more separate information fields into one combined information field, herein referred to as the OPTimization information field, or OPT-field, to identify the compression algorithm and other processing information relevant to the transmitted data. The OPT- field is variable such that a maximum field length is used to provide all the possible field values and the combinations thereof, while a minimum/normal filed length is used for the typical and common filed values. As such, the unused portion of the separate information fields can be reduced or eliminated.

In order to achieve the above-mentioned objective, the first aspect of the present invention is a method of operating a mobile radio network in a packet switched mode in which a first index and a second index are separately used to specify identification values regarding encoding of data for transmitting so as to allow a receiving end to decode the data according to the identification values. The method comprises the steps of:
providing a third index derived from at least the first index and the second index; and
providing an information field in the transmitted data, for conveying the third index to the receiving end.

In this method, at least the first index and the second index are combined to form the third index in a recursive manner that may be applicable to an arbitrary number of indices in addition to the first index and the second index. Also, the first index and the second index are derivable from the third index.

In particular, when the transmitted data includes protocol data and user data, the first index includes a first identification value regarding compression of the protocol data and the second index include a second identification value regarding compression of the user data.

It is possible that the first index is indicative of a first number of values, the second index is indicative of a second number of values, and the third index is indicative of a third number of values, which is a function of the first number of values and the second number of values, and wherein the information field has a length which is variable according to the third number of values.

It is possible that the first identification value is indicative of a compression algorithm type and packet type of the protocol data.

It is possible that the second identification value is indicative of a compression algorithm type and the packet type of the user data.

It is possible that when at least one further index, different from the first index and the second index, is used to specify further identification values regarding the encoding of the transmitted data, the third index is further representative of the further index and the information field is extendable for conveying the further index to the receiving end.

The second aspect of the present invention is a system for operating a mobile radio network in a packet switch mode in which a first index and a second index are separately used to specify identification values regarding encoding of data for transmitting so as to allow a receiving end to decode the data according to the identification values. The system comprises a mechanism for providing a third index representative of the first index and the second index and for providing a signal indicative of the third index, and a mechanism for providing an information field in the transmitted data to include the third index.

It is possible that when a fourth index, different from the first index and the second index, is used to specify further identification values regarding the encoding of the transmitted data, the third index is further representative of the fourth index and the information field is extendable for conveying the fourth index to the receiving end.

The present invention will become apparent upon reading the description taken in conjunction with Figures 1- 5.

### Brief Description of the Drawings

Figure 1 shows a prior-art SNDCP-Data PDU format.
Figure 2 shows a PDCP-Data PDU format, according to the present invention.
Figure 3 is a table illustrating the identification values of the combined informarion field representing the identification values of the PCOMP and DCOMP fields.
Figure 4 is a flow chart illustrating an example of how the OPT-values are defined.
Figure 5 is a block diagram illustrating a system for implementing the OPT field, according to the present invention.

### Best Mode for Carrying Out the Invention

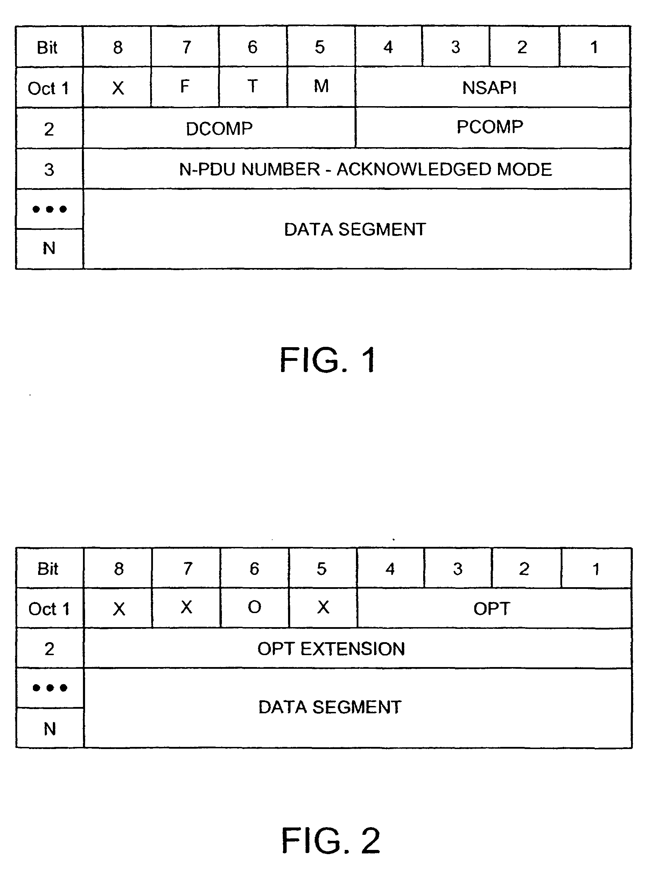

The header structures of a prior art SNDCP (SNDCP = Subnetwork Dependent Convergence Protocol (GPRS)) - Data PDU format is shown in Figure 1. The SNDCP data PDU parameters are defined as follows:
Data compression coding (DCOMP):
   - 0 =: No compression.
   - 1-14 =: Points to the data compression identifier negotiated dynamically (see sub-clause 6.6 of TS 101297 (GSM '04.65) GPRS MS-SGSN SNDCP).
   - 15 =: Reserved for future extensions.
   SN-PDU with an unallocated DCOMP value will be ignored by the receiving SNDCP entity without error notification.
Protocol control information compression coding (PCOMP):
   - 0 =: No compression.
   - 1-14 =: Points to the protocol control information compression identifier negotiated dynamically (see sub-clause 6.5).
   - 15 =: Reserved for future extensions.
   SN-PDU with an unallocated PCOMP value shall be ignored by the receiving SNDCP entity without error notification.
X= spare bit; F= first segment indicator bit; T=SN-PDU type; M= more bit to be used to indicate the last segment of N-PDU.

According to the present invention, a generic OPT-information field is introduced. To gain an advantage in overhead as compared to GPRS, the length of the OPT-field should be smaller than the total length of the fixed information fields of GPRS. The actual length of the OPT-field can be defined arbitrarily, but a current estimate is that it should be 4 bits long, as shown in Figure 2. Figure 2 illustrates an example of the header structures of PDCP (Packet Data Convergence Protocol (UMTS)) - Data PDU format, according to the present invention. The PDCP data PDU parameters are defined as follows:
- 0-bit, OPT and OPT extension:
   OPT field value defines used optimization algorithm and packet type in PDCP. 0-bit indicates whether OPT extension is used. One optimization algorithm may reserve a certain amount of values from OPT field value space, e.g., for different packet types. Receiving PDCP makes reverse operation (e.g., header decompression) according to OPT field value. There is no fixed relation between OPT field value and used optimization/packet type, but OPT field values are defined dynamically at the XID negotiation.
- Spare bit (X):
   0 Shall be set to 0. If reception occurs with the spare bit set to 1, the field shall be ignored without error notification.

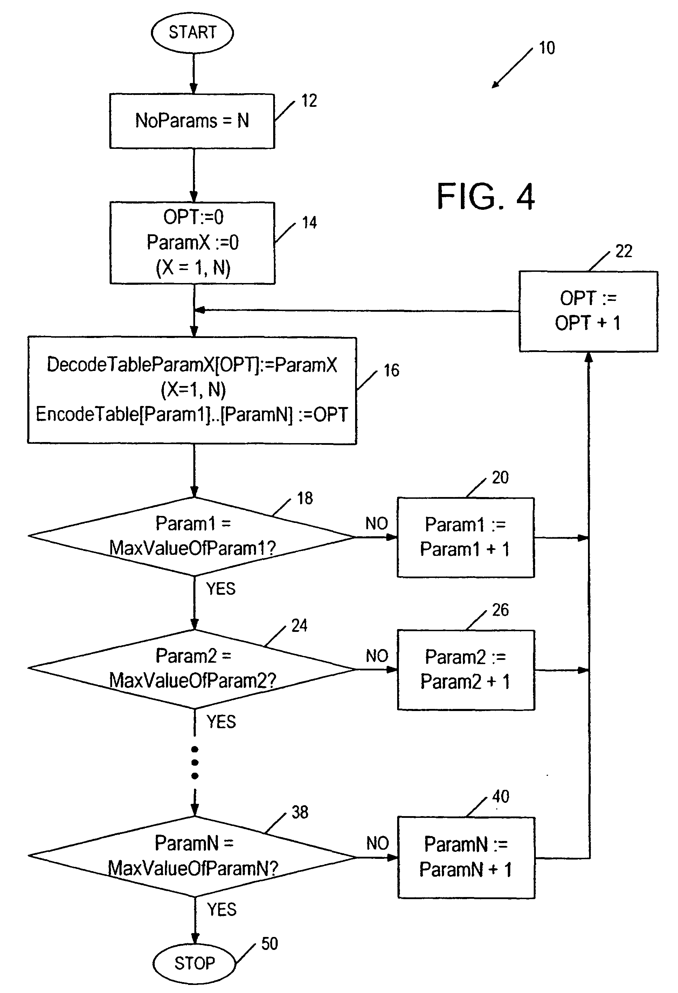

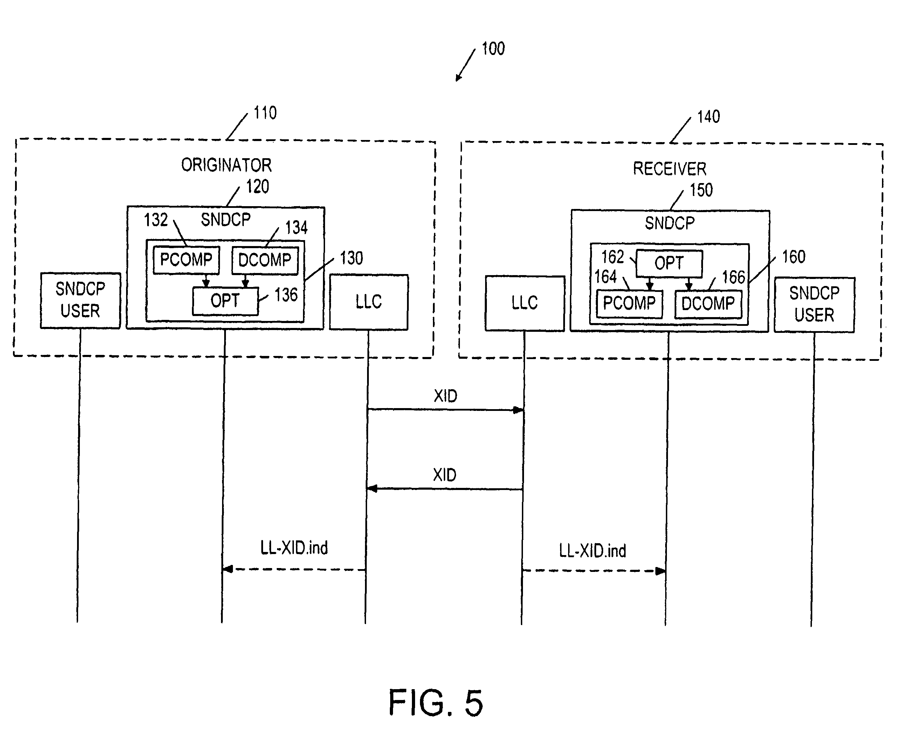

With the OPT extension, each algorithm specified in the OPT-field reserves its own identifiers, as assigned according to the DCOMP and PCOMP values. Once the identifiers are allocated, the OPT values are generated from these identifiers, as shown in Figure 4. During the SNDCP XID negotiation process or the LLC XID negotiation process, instead of the original DCOMP and PCOMP values, only the generated OPT values are sent from the originator to the receiver, as shown in Figure 5. Upon receipt, the OPT values can be deciphered into the original DCOMP and PCOMP values.

The header structures, as shown in Figure 2, use 4 bits to identify the OPT-values in the combined information field. However, if 4-bits is not enough because multiple optimization/algorithm types are used, it is possible extend this OPT field. An estimate is the extension field should be 8 bits long, so that the total maximum length should be 12 bits (4096 values), as shown in Figure 2. It should be noted that extension is used only when it is required. With the OPT-field being extendable, it is not necessary to modify the whole header structure to add the third information field for some new optimization methods. When the extendability of the OPT-field is taken into account, the OPT-field might use more bits than the current GPRS requirement (OPT = 12, GPRS = 8). However, the average or normally required size of the OPT-field is smaller than in a GPRS type approach. Also, identification values can be distributed dynamically between different optimization methods, and there would not come a situation where one optimization method lacks values and another has plenty of them.

According to the present invention, the number of different optimization methods to be combined into the OPT-field is not restricted. Thus, introduction of a new optimization method would not cause rework of the header structure. It is noted that in UMTS only header compression is currently supported (in the first phase). With the extendable OPT-field, addition of data compression would not cause problems later. It should be noted, however, that allocation of each identifier (PCOMP, DCOMP, etc.) should be carried out in a way such that the combination of the identifier values does not exceed the maximum OPT-values (with a 12-bit OPT field, the maximum number of OPT-values is 4095).

The OPT values can be assigned to algorithms and their packets in many different ways. The following is an example. In GPRS, identification values, for example, PCOMP values are given in order when they are negotiated. The first negotiated algorithm receives values 1 to n (n = number of PCOMP values that the particular header compression algorithm requires, for example, one for every packet type). The next algorithm receives values n+1 to m and so on. However, this method is not applicable for the OPT-field, because when using more than one optimization method, combinations of algorithms types used in different optimization methods must be taken into account. In other words, for a particular packet, the header and the data may be compressed with certain algorithms simultaneously (only one algorithm type can be used per optimization method for the same packet).

The extension of the OPT-field should be used only when needed. For example, if the basic OPT-field is 4-bits long, only 15 values can be used (value 0 is reserved for no optimization). In the case where more than 15 values are used (values 1-30, for example), then optimization extension should be used to increase the length of the OPT-field to 5-bits. It is not advantageous, however, to use the extension for every packet, but only for those packets which carry an identification value greater than 15, for example. In that respect, no extension is needed if only values 1-15 are negotiated. However, an extension is used when additional values 16-30 are also negotiated. Therefore, it is advantageous that the most commonly used values (e.g., algorithm types) should have the smallest identification values assigned to them so as to minimize the use of OPT-field extension.

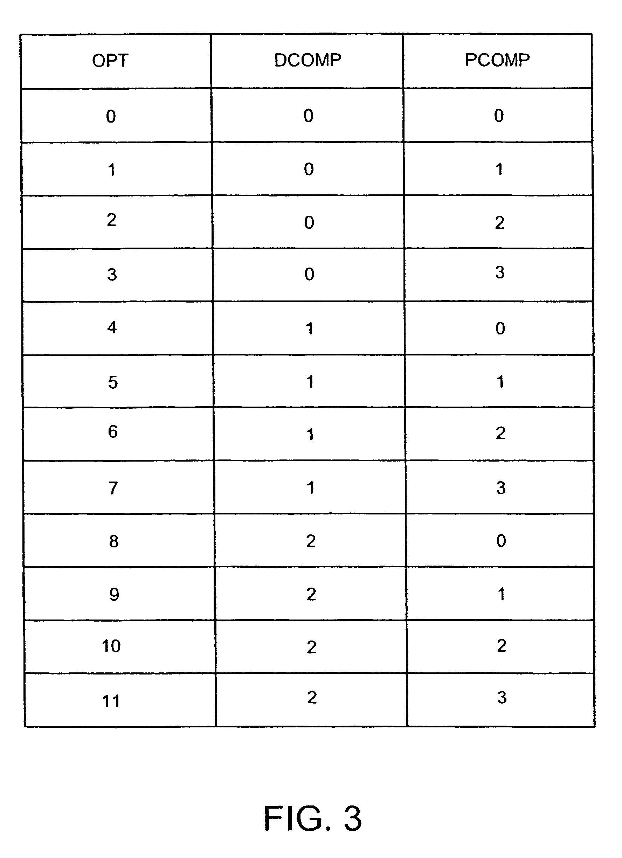

There are many ways to assign the OPT-values for the OPT-field which combine two or more different information fields. The following is one example of how it can be done:
- First, identification values are assigned for every optimization method the same way as in GPRS (e.g., PCOMP, DCOMP)
- Then, OPT-values are defined from these optimization-specific identification values by 'recursive' loops, with each loop representing one optimization method. The following example illustrates the assignment of OPT-values with the combination of two optimization methods (DCOMP and PCOMP). These recursive loops form a table listing the 'encoding' and 'decoding' OPT- values, as shown in Figure 3. The table, as shown in Figure 3, can be generated using the recursive loop, as illustrated in the example code below. In Figure 3, the PCOMP-values in the last column are the values of PCOMP_Arr[OPT], and the DCOMP-values in the second column are the values of DCOMP_Arr[OPT]. The assigned OPT-values in the first column are the values of OPT_Arr[PCOMP][DCOMP].

### Example code:

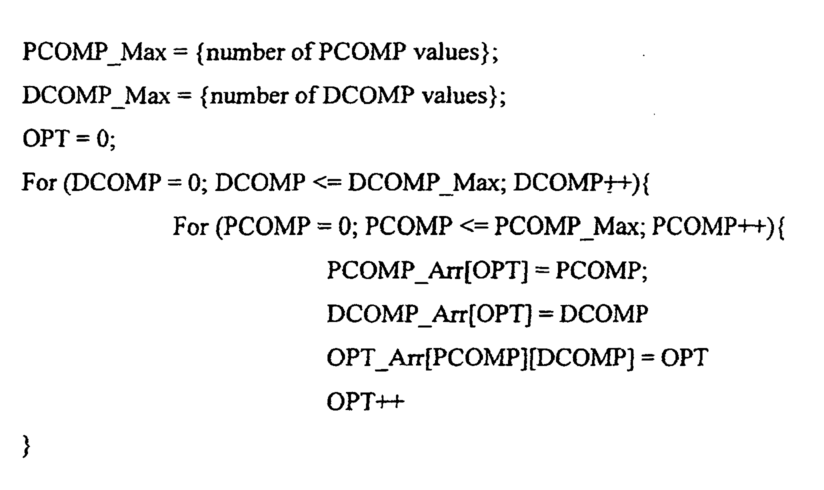

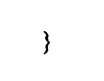

A more generic recursive loop is illustrated in Figure 4, wherein N optimization methods are combined. In the example code, as shown above, N=2.

When sending a packet to the receiving end, the OPT_Arr table is used to identify the 'encoded' OPT-value of the packet. When receiving the packet, DCOMP_Arr and PCOMP_Arr are used to identify the actual 'decoding' PCOMP and DCOMP values. In this example, the PCOMP information field and the DCOMP information field are used as indexes, corresponding to Param1 and Param2, respectively, in the flow chart, as shown in Figure 4. The number of values in the PCOMP information field and the number of values in the DCOMP field are corresponding to the MaxValueOfParaml and the MaxValueOfParam2, respectively, in Figure 4. MaxValueOfParam1 and MaxValueOfParam2 determine the dimensions of the OPT_Arr table. In this particular recursive loop, PCOMP has been assigned values from 0 to 3 (PCOMP_Max = 3) and DCOMP has been assigned values from 0 to 2 (DCOMP_Max = 2). The OPT-values are indexes for the tables shown in Figure 2 and Figure 3.

Figure 4 is a flow chart illustrating a method of generating OPT-values using a recursive loop to combine N separate information fields into one OPT field. As shown, the assignment of the OPT-indexes is carried out a recursive loop **10**. As the loop starts, the variable NoParam is set to N at step **12,** where N is the number of different parameters in different information fields, such as NSAPI, PCOMP and DCOMP, to be combined into the OPT-field. The recursive loop **10** is initialized at step **14,** wherein all variables (parameters) including OPT, Param1, Param2, ..., ParamN, are all set to 0. At step **16**, a table, similar to that shown in Figure 1 for encoding and decoding of OPT parameters, is established. The contents of the table will be filled with one OPT parameter at each loop. At step **18,** the value of Param1 is checked against MaxValueOfParam1. It should be noted that the loop is designed under the assumption that each information field X has a number of parameters, ranging from 0 to some positive integer value, which is defined as MaxValueOfParamX. For example, as shown in Figure 3, the DCOMP information field has 3 parameters (0, 1 and 2), and, therefore, the corresponding MaxValueOfParamX is 3. Similarly, the MaxValueOfParamX for the PCOMP information field is 4 (0, 1, 2 and 3). If Param1 is less than MaxValueOfParam1, then the Param1 is increased by 1 at step **20** so that a new OPT-value can be assigned at step **22.** If Param1 has reached its maximum value, then the value of Param2 is checked against MaxValueOfParam2 at step **24.** If Param2 is less than MaxValueOfParam2, then the Param2 is increased by 1 at step **26** so that a new OPT-value can be assigned at step **22.** If Param2 has reached its maximum value, then the value of Param3 is checked against MaxValueOfParam3 (not shown), and so forth. When Param(N-1) has reached its maximum value, the value of ParamN is checked against MaxValueOfParamN at step **38.** If ParamN is less than MaxValueOfParamN, then ParamN is increased by 1 at step **40** so that a new OPT-value can be assigned at step **22.** Otherwise, the loop will be terminated at step **50.**

In Figure 3, there are two different indexes representing the DCOMP and PCOMP information fields. Each index has a number of values. The DCOMP index has 3 values and the PCOMP index has 4 values. Thus, the optimum length of the OPT field, as shown in Figure 3, is equal to 12 (3 times 4), sufficient to carry the maximum OPT value, from 0 to 11. In general, when there are N different information fields, the number of values of index 1 can be denoted by #_Values_of_Index1, the number of values of index 2 can be denoted by #_Values_of_Index2, ...., and the number of values of index N is denoted by #_Values_of_IndexN. Accordingly, the OPT-values range from 0 to X. The number of bits sufficient for an OPT-field to carry X OPT-values is given by M where 2'M X. For example, if N=3, #_Values_of_Index1=5, #_Values_of_Index2=9 and #_Values_of_Index3=11, X=5x9x11=495. This means that the OPT-values range from 0 to 495. In that case, the length of the OPT field should be 9 bits, or M=9, with 2" 9=512. If separate fields are used to identify the encoding information, 11 bits would be necessary.

Figure 5 is a diagrammatic representation of a system **100** for implementing the OPT-field in a typical LLC XID negotiation procedure. However, the same system can be used for a Subnetwork Dependent Convergence Protocol (SNDCP) XID negotiation process. As shown in Figure 5, the SNDCP **120** on the originator side **110** includes a mechanism **130** capable of combining separated information fields, such as the PCOMP field **132** and the DCOMP field **134** into an OPT-field **136.** On the receiver side **140,** the SNDCP **150** includes a mechanism **160** capable of separating the combined OPT-field **162** as obtained by the receiver side **140** during an XID negotiation into separated information fields, such as the PCOMP field **164** and the DCOMP field **166**. The XID exchange procedure is well known in the art.

Although the invention has been described with respect to a preferred embodiment thereof, it will be understood by those skilled in the art that the foregoing and various other changes, omissions and deviations in the form and detail thereof may be made without departing from the scope of this invention.

## Claims

1. A method of operating a mobile radio network in a packet switched mode in which a first index (132) and a second index (134) are separately used to specify identification values regarding encoding of data for transmitting so as to allow a receiving end to decode received data according to the identification values, said method **characterized by**:
providing a third index (136) derived from at least the first index (132) and the second index; and
providing an information field in the transmitted data, for conveying the third index (136) to the receiving end,
wherein at least the first index (132) and the second index (134) are combined to form the third index (136) in a recursive manner, and
wherein the first index (132) and the second index (134) are derivable from the third index (136).

2. The method of claim 1, wherein the transmitted data includes protocol data and user data, the first index (132) includes a first identification value regarding compression of the protocol data and the second index (134) includes a second identification value regarding compression of the user data.

3. The method of claim 1, wherein the first index (132) is indicative of a first number of values, the second index (134) is indicative of a second number of values, and the third index (136) is indicative of a third number of values, which is a function of the first number of values and the second number of values, and wherein the information field has a length which is variable according to the third number of values.

4. The method of claim 2, wherein the first identification value is indicative of a compression algorithm type and packet type of the protocol data.

5. The method of claim 2, wherein the first identification value is indicative of a packet type of the protocol data.

6. The method of claim 2, wherein the first identification value is indicative of a compression algorithm type of the protocol data.

7. The method of claim 2, wherein the second identification value is indicative of a compression algorithm type and packet type of the user data.

8. The method of claim 2, wherein the second identification value is indicative of a compression algorithm type of the user data.

9. The method of claim 2, wherein the second identification value is indicative of a packet type of the user data.

10. The method of claim 1, wherein at least one further index, different from the first index (132) and the second index (134), is used to specify further identification values regarding the encoding of the transmitted data, and wherein the third index (136) is further representative of the further index and the information field is extendable for conveying the further index to the receiving end.

11. The method of claim 1, wherein the first index (132) is provided in a field having a first length, the second index (134) is provided in a further field having a second length, and the information field for conveying the third index (136) has a third length, wherein the third length is smaller than a sum of the first length and the second length.

12. The method of claim 11, wherein the third length is arbitrarily assigned.

13. The method of claim 11, wherein the third length is extendable.

14. The method of claim 3, wherein the first index (132) is provided in a field having a first length, the second index (134) is provided in a further field having a second length, and the information field for conveying the third index (136) has a third length, wherein the third length is smaller than a sum of the first length and the second length.

15. The method of claim 14, wherein the first number of values is changeable, the second number of values is changeable and the third length is changeable according to the first number of values and the second number of values.

16. The method of claim 15, wherein the third length is 4 bits long.

17. The method of claim 3, wherein the length of the information field is 4 bits long.

18. A system for operating a communications network in a packet switch mode in which a first index (132) and a second index (134) are separately used to specify identification values regarding encoding of data for transmitting by an originator end, so as to allow a receiving end to decode the data according to the identification values, said system **characterized by**:
means, in the originator end, responding to the first index (132) and the second index, for providing a third index (136) derived from at least the first index (132) and the second index (134) and for providing a signal indicative of the third index, and
means, in the originator end, responding to the signal, for providing an information field in the transmitted data to include the third index,
wherein at least the first index (132) and the second index (134) are combined to form the third index (136) in a recursive manner that is applicable to an arbitrary number of indices in addition to the first index (132) and the second index, and
wherein the first index (132) and the second index (134) are derivable from the third index (136).

19. The system of claim 18, further comprising:
means, in the receiving end, responding to the information field in the transmitted data, for providing a further signal representative of the third index; and
means, in the receiving end, responding to the further signal, for separating the third index (136) into the first index (132) and the second index (134).

20. The system of claim 18, wherein a fourth index, different from the first index (132) and the second index (134), is used to specify further identification values regarding the encoding of the transmitted data, the third index (136) is further representative of the fourth index and the information field is extendable for conveying the fourth index to the receiving end.

21. The system of claim 18, wherein the first index (132) is provided in a field having a first length, and the second index (134) is provided in a further field having a second length, wherein the information field for including the third length is smaller than a sum of the first length and the second length.

22. The system of claim 21, wherein the third length is arbitrarily defined.

23. The system of claim 22, wherein the third length is extendable.

24. The system of claim 18, wherein the communications network comprises a mobile radio network.

25. The method of claim I, wherein the manner of combining to form the third index (136) is applicable to an arbitrary number of indices in addition to the first index (132) and the second index (134).

26. The system of claim 18, wherein the manner of combining to form the third index (136) is applicable to an arbitrary number of indices in addition to the first index (132) and the second index (134).

## Patentansprüche

1. Verfahren zum Betreiben eines Mobilfunknetzwerks in einer paketvermittelten Betriebsart, in der ein erster Index (132) und ein zweiter Index (134) separat verwendet werden, um Identifikationswerte in Bezug auf eine Codierung von Daten zur Übertragung festzulegen, um es einem Empfangsende zu ermöglichen, empfangene Daten gemäß den Identifikationswerten zu decodieren, und das Verfahren ist **gekennzeichnet durch** die Schritte:
Bereitstellen eines dritten Index (136), der zumindest aus dem ersten Index (132) und dem zweiten Index hergeleitet wird; und
Bereitstellen eines Informationsfelds in den übertragenen Daten, um den dritten Index (136) an das Empfangsende zu transportieren,
wobei zumindest der erste Index (132) und der zweite Index (134) kombiniert werden, um den dritten Index (136) auf eine rekursive Art und Weise zu bilden, und
wobei der erste Index (132) und der zweite Index (134) aus dem dritten Index (136) herleitbar sind.

2. Verfahren gemäß Anspruch 1, bei dem die übertragenen Daten Protokolldaten und Teilnehmerdaten enthalten, der erste Index (132) einen ersten Identifikationswert in Bezug auf eine Komprimierung der Protokolldaten enthält und der zweite Index (134) einen zweiten Identifikationswert in Bezug auf eine Komprimierung der Teilnehmerdaten enthält.

3. Verfahren gemäß Anspruch 1, bei dem der erste Index (132) auf eine erste Anzahl von Werten hinweist, der zweite Index (134) auf eine zweite Anzahl von Werten hinweist und der dritte Index (136) auf eine dritte Anzahl von Werten hinweist, die eine Funktion der ersten Anzahl von Werten und der zweiten Anzahl von Werten ist, und bei dem das Informationsfeld eine Länge aufweist, die gemäß der dritten Anzahl von Werten variabel ist.

4. Verfahren gemäß Anspruch 2, bei dem der erste Identifikationswert auf einen Komprimierungsalgorithmustyp und einen Pakettyp der Protokolldaten hinweist.

5. Verfahren gemäß Anspruch 2, bei dem der erste Identifikationswert auf einen Pakettyp der Protokolldaten hinweist.

6. Verfahren gemäß Anspruch 2, bei dem der erste Identifikationswert auf einen Komprimierungsalgorithmustyp der Protokolldaten hinweist.

7. Verfahren gemäß Anspruch 2, bei dem der zweite Identifikationswert auf einen Komprimierungsalgorithmustyp und einen Pakettyp der Teilnehmerdaten hinweist.

8. Verfahren gemäß Anspruch 2, bei dem der zweite Identifikationswert auf einen Komprimierungsalgorithmustyp der Teilnehmerdaten hinweist.

9. Verfahren gemäß Anspruch 2, bei dem der zweite Identifikationswert auf einen Pakettyp der Teilnehmerdaten hinweist.

10. Verfahren gemäß Anspruch 1, bei dem zum Festlegen weiterer Identifikationswerte in Bezug auf die Codierung der übertragenen Daten mindestens ein weiterer Index verwendet wird, der sich von dem ersten Index (132) und dem zweiten Index (134) unterscheidet, und bei dem der dritte Index (136) zusätzlich für den weiteren Index repräsentativ ist und das Informationsfeld zum Transportieren des weiteren Index an das Empfangsende erweiterbar ist.

11. Verfahren gemäß Anspruch 1, bei dem der erste Index (132) in einem Feld mit einer ersten Länge bereitgestellt wird, der zweite Index (134) in einem weiteren Feld mit einer zweiten Länge bereitgestellt wird und das Informationsfeld zum Transportieren des dritten Index (136) eine dritte Länge aufweist, wobei die dritte Länge kleiner ist als eine Summe der ersten Länge und der zweiten Länge.

12. Verfahren gemäß Anspruch 11, bei dem die dritte Länge willkürlich bestimmt wird.

13. Verfahren gemäß Anspruch 11, bei dem die dritte Länge erweiterbar ist.

14. Verfahren gemäß Anspruch 3, bei dem der erste Index (132) in einem Feld mit einer ersten Länge bereitgestellt wird, der zweite Index (134) in einem weiteren Feld mit einer zweiten Länge bereitgestellt wird und das Informationsfeld zum Transportieren des dritten Index (136) eine dritte Länge aufweist, wobei die dritte Länge kleiner ist als eine Summe der ersten Länge und der zweiten Länge.

15. Verfahren gemäß Anspruch 14, bei dem die erste Anzahl von Werten veränderbar ist, die zweite Anzahl von Werten veränderbar ist und die dritte Länge gemäß der ersten Anzahl von Werten und der zweiten Anzahl von Werten veränderbar ist.

16. Verfahren gemäß Anspruch 15, bei dem die dritte Länge 4 Bits lang ist.

17. Verfahren gemäß Anspruch 3, bei dem die Länge des Informationsfelds 4 Bits lang ist.

18. System zum Betreiben eines Kommunikationsnetzwerks in einer paketvermittelten Betriebsart, in der ein erster Index (132) und ein zweiter Index (134) separat verwendet werden, um Identifikationswerte in Bezug auf eine Codierung von Daten zur Übertragung durch ein Absenderende festzulegen, um es einem Empfangsende zu ermöglichen, die Daten gemäß den Identifikationswerten zu decodieren, und das System ist **gekennzeichnet durch**:
eine Einrichtung im Absenderende, die auf den ersten Index (132) und den zweiten Index anspricht, zum Bereitstellen eines dritten Index (136), der zumindest aus dem ersten Index (132) und dem zweiten Index (134) hergeleitet wird, und zum Bereitstellen eines auf den dritten Index hinweisenden Signals, und
eine Einrichtung im Absenderende, die auf das Signal anspricht, zum Bereitstellen eines Informationsfelds in den übertragenen Daten, um den dritten Index aufzunehmen,
wobei zumindest der erste Index (132) und der zweite Index (134) kombiniert werden, um den dritten Index (136) auf eine rekursive Art und Weise zu bilden, die zusätzlich zum ersten Index (132) und zum zweiten Index auf eine beliebige Anzahl von Indizes anwendbar ist, und
wobei der erste Index (132) und der zweite Index (134) aus dem dritten Index (136) herleitbar sind.

19. System gemäß Anspruch 18, zusätzlich mit:
einer Einrichtung im Empfangsende, die auf das Informationsfeld in den übertragenen Daten anspricht, zum Bereitstellen eines weiteren Signals, das für den dritten Index repräsentativ ist; und
einer Einrichtung im Empfangsende, die auf das weitere Signal anspricht, zum Aufteilen des dritten Index (136) in den ersten Index (132) und den zweiten Index (134).

20. System gemäß Anspruch 18, bei dem zum Festlegen weiterer Identifikationswerte in Bezug auf die Codierung der übertragenen Daten ein vierter Index verwendet wird, der sich von dem ersten Index (132) und dem zweiten Index (134) unterscheidet, der dritte Index (136) zusätzlich für den vierten Index repräsentativ ist und das Informationsfeld zum Transportieren des vierten Index an das Empfangsende erweiterbar ist.

21. System gemäß Anspruch 18, bei dem der erste Index (132) in einem Feld mit einer ersten Länge bereitgestellt ist und der zweite Index (134) in einem weiteren Feld mit einer zweiten Länge bereitgestellt ist, wobei das Informationsfeld zum Aufnehmen der dritten Länge kleiner ist als eine Summe der ersten Länge und der zweiten Länge.

22. System gemäß Anspruch 21, bei dem die dritten Länge willkürlich definiert ist.

23. System gemäß Anspruch 22, bei dem die dritte Länge erweiterbar ist.

24. System gemäß Anspruch 18, bei dem das Kommunikationsnetzwerk ein Mobilfunknetzwerk aufweist.

25. Verfahren gemäß Anspruch 1, bei dem die Kombinationsmethode zum Bilden des dritten Index (136) zusätzlich zum ersten Index (132) und zum zweiten Index (134) auf eine beliebige Anzahl von Indizes anwendbar ist.

26. System gemäß Anspruch 18, bei dem die Kombinationsmethode zum Bilden des dritten Index (136) zusätzlich zum ersten Index (132) und zum zweiten Index (134) auf eine beliebige Anzahl von Indizes anwendbar ist.

## Revendications

1. Procédé de mise en oeuvre d'un réseau radio mobile dans un mode de commutation de paquets dans lequel un premier index (132) et un deuxième index (134) sont utilisés séparément pour spécifier des valeurs d'identification concernant le codage de données pour transmission de manière à permettre à une extrémité de réception de décoder des données reçues conformément aux valeurs d'identification, ledit procédé étant **caractérisé par** :
la fourniture d'un troisième index (136) déduit d'au moins le premier index (132) et le deuxième index ; et
la fourniture d'un champ d'informations dans les données transmises, pour acheminer le troisième index (136) vers l'extrémité de réception,
dans lequel au moins le premier index (132) et le deuxième index (134) sont combinés pour former le troisième index (136) d'une manière récursive, et
dans lequel le premier index (132) et le deuxième index (134) peuvent être déduits du troisième index (136).

2. Procédé selon la revendication 1, dans lequel les données transmises comprennent des données de protocole et des données d'utilisateur, le premier index (132) comprend une première valeur d'identification concernant la compression des données de protocole et le deuxième index (134) comprend une deuxième valeur d'identification concernant la compression des données d'utilisateur.

3. Procédé selon la revendication 1, dans lequel le premier index (132) est indicatif d'un premier nombre de valeurs, le deuxième index (134) est indicatif d'un deuxième nombre de valeurs, et le troisième index (136) est indicatif d'un troisième nombre de valeurs, qui est une fonction du premier nombre de valeurs et du deuxième nombre de valeurs, et dans lequel le champ d'informations a une longueur qui est variable en fonction du troisième nombre de valeurs.

4. Procédé selon la revendication 2, dans lequel la première valeur d'identification est indicative d'un type d'algorithme de compression et d'un type de paquet des données de protocole.

5. Procédé selon la revendication 2, dans lequel la première valeur d'identification est indicative d'un type de paquet des données de protocole.

6. Procédé selon la revendication 2, dans lequel la première valeur d'identification est indicative d'un type d'algorithme de compression des données de protocole.

7. Procédé selon la revendication 2, dans lequel la deuxième valeur d'identification est indicative d'un type d'algorithme de compression et d'un type de paquet des données d'utilisateur.

8. Procédé selon la revendication 2, dans lequel la deuxième valeur d'identification est indicative d'un type d'algorithme de compression des données d'utilisateur.

9. Procédé selon la revendication 2, dans lequel la deuxième valeur d'identification est indicative d'un type de paquet des données d'utilisateur.

10. Procédé selon la revendication 1, dans lequel au moins un index supplémentaire, différent du premier index (132) et du deuxième index (134), est utilisé pour spécifier des valeurs d'identification supplémentaires concernant le codage des données transmises, et dans lequel le troisième index (136) est, en outre, représentatif de l'index supplémentaire et le champ d'informations est extensible pour acheminer l'index supplémentaire vers l'extrémité de réception.

11. Procédé selon la revendication 1, dans lequel le premier index (132) est fourni dans un champ ayant une première longueur, le deuxième index (134) est fourni dans un champ supplémentaire ayant une deuxième longueur, et le champ d'informations pour acheminer le troisième index (136) a une troisième longueur, dans lequel la troisième longueur est inférieure à une somme de la première longueur et de la deuxième longueur.

12. Procédé selon la revendication 11, dans lequel la troisième longueur est attribuée arbitrairement.

13. Procédé selon la revendication 11, dans lequel la troisième longueur est extensible.

14. Procédé selon la revendication 3, dans lequel le premier index (132) est fourni dans un champ ayant une première longueur, le deuxième index (134) est fourni dans un champ supplémentaire ayant une deuxième longueur, et le champ d'informations pour acheminer le troisième index (136) a une troisième longueur, dans lequel la troisième longueur est inférieure à une somme de la première longueur et de la deuxième longueur.

15. Procédé selon la revendication 14, dans lequel le premier nombre de valeurs est modifiable, le deuxième nombre de valeurs est modifiable et la troisième longueur est modifiable conformément au premier nombre de valeurs et au deuxième nombre de valeurs.

16. Procédé selon la revendication 15, dans lequel la troisième longueur est de 4 bits.

17. Procédé selon la revendication 3, dans lequel la longueur du champ d'informations est de 4 bits.

18. Système pour mettre en oeuvre un réseau de communication dans un mode de commutation de paquets dans lequel un premier index (132) et un deuxième index (134) sont utilisés séparément pour spécifier des valeurs d'identification concernant le codage de données pour transmission par une extrémité d'expédition de manière à permettre à une extrémité de réception de décoder les données conformément aux valeurs d'identification, ledit système étant **caractérisé par** :
des moyens, dans l'extrémité d'expédition, répondant au premier index (132) et au deuxième index, pour fournir un troisième index (136) déduit d'au moins le premier index (132) et le deuxième index (134) et pour fournir un signal indicatif du troisième index ; et
des moyens, dans l'extrémité d'expédition, répondant au signal, pour fournir un champ d'informations dans les données transmises pour inclure le troisième index,
dans lequel au moins le premier index (132) et le deuxième index (134) sont combinés pour former le troisième index (136) d'une manière récursive qui est applicable à un nombre arbitraire d'index en plus du premier index (132) et du deuxième index, et
dans lequel le premier index (132) et le deuxième index (134) peuvent être déduits du troisième index (136).

19. Système selon la revendication 18, comprenant en outre :
des moyens, dans l'extrémité de réception, réagissant au champ d'informations dans les données transmises, pour fournir un signal supplémentaire représentatif du troisième index ; et
des moyens, dans l'extrémité de réception, réagissant au signal supplémentaire, pour séparer le troisième index (136) en le premier index (132) et le deuxième index (134).

20. Système selon la revendication 18, dans lequel un quatrième index, différent du premier index (132) et du deuxième index (134), est utilisé pour spécifier des valeurs d'identification supplémentaires concernant le codage des données transmises, le troisième index (136) est, en outre, représentatif du quatrième index et le champ d'informations est extensible pour acheminer le quatrième index vers l'extrémité de réception.

21. Système selon la revendication 18, dans lequel le premier index (132) est fourni dans un champ ayant une première longueur, et le deuxième index (134) est fourni dans un champ supplémentaire ayant une deuxième longueur, dans lequel le champ d'informations pour inclure la troisième longueur est inférieur à une somme de la première longueur et de la deuxième longueur.

22. Système selon la revendication 21, dans lequel la troisième longueur est définie arbitrairement.

23. Système selon la revendication 22, dans lequel la troisième longueur est extensible.

24. Système selon la revendication 18, dans lequel le réseau de communication comprend un réseau radio mobile.

25. Procédé selon la revendication 1, dans lequel la manière de combiner pour former le troisième index (136) est applicable à un nombre arbitraire d'index en plus du premier index (132) et du deuxième index (134).

26. Système selon la revendication 18, dans lequel la manière de combiner pour former le troisième index (136) est applicable à un nombre arbitraire d'index en plus du premier index (132) et du deuxième index (134).
